# EUROPÄISCHE PATENTSCHRIFT

(11) **EP 2 673 502 B1**
(45) Veröffentlichungstag und Bekanntmachung des Hinweises auf die Patenterteilung: **20.04.2016**
(21) Anmeldenummer: 12703452.8
(22) Anmeldetag: 06.02.2012
(51) Int. Cl.: F03D 7/02, F03D 7/04

(54) **VERFAHREN ZUM BETREIBEN EINER WINDENERGIEANLAGE UND WINDENERGIEANLAGE**
METHOD FOR OPERATING A WIND POWER INSTALLATION AND WIND POWER INSTALLATION
PROCÉDÉ SERVANT À FAIRE FONCTIONNER UNE ÉOLIENNE ET ÉOLIENNE

(30) Priorität: 11.02.2011 DE 102011003974
(43) Veröffentlichungstag der Anmeldung: 18.12.2013
(73) Patentinhaber: Senvion GmbH, 22297 Hamburg (DE)
(72) Erfinder: SIEVERS, Oliver, 24787 Fockbek (DE); WARFEN, Karsten, 23795 Söhren (DE)
(74) Vertreter: Seemann & Partner
(86) Internationale Anmeldenummer: PCT/EP2012/000519
(87) Internationale Veröffentlichungsnummer: WO 2012/107195

(56) Entgegenhaltungen:
- EP-A1- 2 028 371
- EP-A2- 2 065 595
- DE-A1-102005 007 471
- DE-A1-102005 046 860
- DE-A1-102007 004 027
- DE-A1-102007 025 314

## Beschreibung

Die Erfindung betrifft ein Verfahren zum Betreiben einer Windenergieanlage, die einen Rotor mit wenigstens einem Rotorblatt und eine Betriebssteuervorrichtung umfasst, sowie eine Windenergieanlage, umfassend einen Rotor mit wenigstens einem Rotorblatt und eine Betriebssteuervorrichtung.

Windenergieanlagen mit Rotorblättern und einer horizontalen Rotorachse stellen für fliegende Tiere ein Hindernis dar. Bei rotierendem Rotor kann dies zu tödlichen Kollisionen der Tiere mit den Rotorblättern führen. Da die Genehmigungsbehörden bei der Projektierung von Standorten von Windenergieanlagen und von Windparks mit mehreren Windenergieanlagen Rücksicht darauf zu nehmen haben, wenn in der Nähe geschützte Tierarten, insbesondere Fledermausarten, nisten oder brüten, führt dies häufig dazu, dass Baugenehmigungen für Windenergieanlagen oder Windparks nicht oder nur unter strengen Auflagen erteilt werden. So müssen Windenergieanlagen in betroffenen Gebieten zu den Zeiten, in denen Fledermausflüge hauptsächlich zu erwarten sind, nachts vollständig abgeschaltet werden, so dass eine gefährdende Rotation der Rotorblätter der Windenergieanlage vermieden wird.

Ein völliges Abschalten der Windenergieanlage zu Nachtzeiten führt zu erheblichen Ausfallzeiten, in denen die Anlagen keine Energie erzeugen können und daher unwirtschaftlich sind.

Aus WO 2007/038992 A1 ist ein Verfahren zur Regelung einer Windenergieanlage bekannt, wobei zumindest das räumliche Umfeld der Windenergieanlage bereichsweise mittels einer geeigneten Detektionseinrichtung überwacht wird, wobei bei einem Eindringen eines Flugobjektes bestimmter Art, insbesondere einer Fledermaus, in den überwachten Bereich die Detektionseinrichtung ein Signal erzeugt und wobei abhängig von dem Signal zumindest ein Betriebsparameter der Windenergieanlage, wie etwa der Windanstellwinkel des Rotorblatts, eingestellt wird. Das entsprechende Sensorsystem ist aufwendig und störanfällig, so dass Abschaltungen in vielen Fällen auch dann erfolgen, wenn kein Tier aus einer gefährdeten Tierart in den Überwachungsbereich eingedrungen ist.

DE 10 2005 046 860 A1 zeigt ein Verfahren zur Regelung einer Windenergieanlage, bei dem das räumliche Umfeld der Windenergieanlage mittels geeigneter Detektionseinrichtungen überwacht wird. Bei Eindringen eines Flugobjektes, insbesondere einer Fledermaus, in den überwachten Bereich erzeugt die Detektionseinrichtung ein Signal, wobei abhängig von diesem Signal zumindest ein Betriebsparameter der Windenergieanlage, insbesondere die Rotordrehzahl, verändert wird. Ferner können Ultraschallemitter an den Rotorblättern vorgesehen sein, um Fledermäuse durch Schallemission zu vertreiben.

Aus DE 10 2007 025 314 A1 geht eine Windkraftanlage hervor, welche zum Schutz von fliegenden Tieren vor Kollisionen mit den umlaufenden Rotorblättern auf den Rotorblättern angebrachten lokale Schallquellen aufweist. Das ausgesendete Schallspektrum ist so gewählt, dass es von den fliegenden Tieren geortet werden kann, so dass es gelingt, diese von dem Windrad fernzuhalten.

Ferner ist in DE 10 2005 007 471 A1 eine Vorrichtung zum Abschalten einer Windkraftanlage offenbart. Abhängig von dem Datum, der Uhrzeit, der Rotor- und Sonnenposition wird der Schattenwurf des Rotors berechnet und geprüft, ob ein Grundstück oder Gebäude davon beeinträchtigt ist, so dass der von dem sich drehenden Rotor erzeugte pulsierende Schatten nicht auf das betreffende Grundstück oder Gebäude fällt.

Aufgabe der Erfindung ist es, ein einfaches und zuverlässiges Verfahren sowie eine entsprechende Windenergieanlage zur Verfügung zu stellen, bei denen ein effektiver Schutz von Fledermäusen mit einer möglichst geringen Effizienzeinbuße verbunden ist.

Diese Aufgabe wird durch ein Verfahren zum Betreiben einer Windenergieanlage, die einen Rotor mit wenigstens einem Rotorblatt und eine Betriebssteuervorrichtung umfasst, gelöst, das dadurch weitergebildet ist, dass zum Schutz von Fledermäusen in kumulativer Abhängigkeit von den Umgebungsvariablen Umgebungshelligkeit, kalendarisches Datum, Windgeschwindigkeit und Umgebungstemperatur die Rotordrehzahl reduziert wird.

Es sind somit erfindungsgemäß wenigstens vier Umgebungsvariablen definiert, die jeweils bestimmten, insbesondere artspezifischen, Bedingungen entsprechen müssen, bevor die Rotordrehzahl reduzielt wird. Diese Bedingungen müssen kumulativ, d.h. alle zugleich, erfüllt sein, bevor die Drehzahlreduzierung aktiviert wird. Die so definierten Umgebungsvariablen, nämlich die Umgebungshelligkeit, das kalendarische Datum, die Windgeschwindigkeit und die Umgebungstemperatur, sind jeweils solche Variablen, von denen das Flugverhalten der geschützten Fledermausarten abhängt. So fliegen Fledermäuse bei geringerer Helligkeit in der Zeit kurz vor bis nach dem Sonnenaufgang oder Sonnenuntergang für eine gewisse Zeit. Das kalendarische Datum wird ausgewählt, da Fledermäuse einen Winterschlaf halten und vor allem im Sommer aktiv sind. Die Windgeschwindigkeit wird verwendet, da Fledermäuse bei starkem Wind weniger oder nicht mehr aktiv sind. Die Umgebungstemperatur wird ebenfalls so ausgewählt, dass diese die Flugaktivität von Fledermäusen begünstigt.

Vorzugsweise wird die Drehzahlreduzierung aktiviert, wenn die Umgebungshelligkeit einen vorbestimmten oder vorbestimmbaren Helligkeitsgrenzwert unterschreitet, das kalendarische Datum in einem vorbestimmten oder vorbestimmbaren Datumsbereich liegt, die Windgeschwindigkeit unterhalb einer vorbestimmten oder vorbestimmbaren Grenzwindgeschwindigkeit liegt und die Umgebungstemperatur oberhalb einer vorbestimmten oder vorbestimmbaren Grenztemperatur liegt. Diese Grenzwerte für die Helligkeit, das kalendarische Datum, die Windgeschwindigkeit und die Umgebungstemperatur hängen von der jeweiligen Art der geschützten Tiere bzw. Fledermäuse ab, da diese artspezifisch unterschiedliches Flugverhalten zeigen. Der Helligkeitsgrenzwert kann beispielsweise so definiert sein, dass er derjenigen Helligkeit entspricht, bei der die dämmerungsaktiven Tiere ihre Flugaktivität aufnehmen. Der Datumsbereich entspricht beispielsweise den Sommermonaten, speziell demjenigen Zeitraum im Frühjahr bis Herbst, in dem Fledermäuse in der Nähe der Windenergieanlage oder des Windparks der beheimateten Art besonders aktiv sind.

Als Windgeschwindigkeitsmesswert wird vorzugsweise ein laufender Mittelwert der Windgeschwindigkeit, beispielsweise ein Mittelwert über einen Zeitraum von 10 Minuten, verwendet. Grenzwindgeschwindigkeiten können etwa im Bereich von 3 m/s bis 15 m/s, insbesondere zwischen 5 m/s und 12 m/s, besonders bevorzugt bei etwa 9 m/s, liegen. Grenztemperaturen liegen vorzugsweise zwischen 3 °C und 20 °C, vorzugsweise zwischen 5 °C und 15 °C, besonders bevorzugt bei etwa 8 °C.

Das Verfahren erfährt eine vorteilhafte Weiterbildung, wenn eine Drehzahlreduzierung nur erfolgt, wenn zusätzlich eine gemessene Niederschlagsstärke unterhalb eines vorbestimmten oder vorbestimmbaren Niederschlagsgrenzwerts liegt. Ein starker Niederschlag hindert die Fledermäuse ebenfalls an Flugaktivitäten, zumal die bevorzugte Jagdbeute, kleine Insekten, bei starken Niederschlägen ebenfalls nicht fliegen. Ein Niederschlagsgrenzwert liegt vorzugsweise zwischen 0,1 l/h pro qm und 15 l/h pro qm, ferner vorzugsweise bei etwa 3 l/h pro qm. Diese Grenzwerte sind artenspezifisch anzupassen.

Falls die Position einer Kolonie von Fledermäusen oder entsprechenden anderen artengeschützten Tieren relativ zu der Windenergieanlage oder einem Windpark bekannt ist, ist ferner vorzugsweise vorgesehen, dass eine Drehzahlreduzierung nur erfolgt, wenn zusätzlich eine Windrichtung und/oder eine Ausrichtung der Windenergieanlage, insbesondere der Gondel, innerhalb eines vorbestimmten oder vorbestimmbaren Winkelbereichs liegt. Dieser Winkelbereich erstreckt sich um die Richtung zu der Kolonie der Fledermäuse oder anderer artengeschützter fliegender Tiere herum und schließt einen Winkelsektor ein, innerhalb dessen oder aus dem das Auftreten von fliegenden Tieren zu erwarten ist. Dieser Winkelbereich hängt von den lokalen Gegebenheiten ab. Auch der Windrichtungsmesswert ist vorzugsweise über ein Zeitintervall gemittelt, vorzugsweise zwischen 5 und 30 Minuten, insbesondere etwa 10 Minuten.

Vorzugsweise wird die Drehzahlreduzierung spätestens nach einem vorbestimmten oder vorbestimmbaren Zeitintervall aufgehoben. Ein entsprechendes Zeitintervall ist vorzugsweise zwischen zwei und fünf Stunden, ferner vorzugsweise zwischen zweieinhalb und dreieinhalb Stunden, insbesondere drei Stunden. Dies entspricht in etwa der Flugaktivität von Fledermäusen und ist artenspezifisch auszuwählen.

Vorzugsweise wird eine bestehende Drehzahlreduzierung aufgehoben, wenn die Windgeschwindigkeit die Grenzwindgeschwindigkeit um einen vorbestimmten oder vorbestimmbaren Windgeschwindigkeitspufferwert überschreitet, wenn die Umgebungstemperatur den Temperaturgrenzwert um einen vorbestimmten oder vorbestimmbaren Temperaturpufferwert unterschreitet, wenn die gemessene Niederschlagsstärke den Niederschlagsgrenzwert um einen vorbestimmten oder vorbestimmbaren Niederschlagspufferwert überschreitet oder wenn die Windrichtung und/oder die Ausrichtung der Windenergieanlage sich um mehr als einen vorbestimmten oder vorbestimmbaren Grenzwinkelpuffer aus dem Winkelbereich heraus bewegt. In jedem dieser Fälle nimmt die Wahrscheinlichkeit von Flugaktivitäten artengeschützter Tiere, insbesondere Fledermäusen, stark ab. Die Pufferwerte, die auch als Hysteresewerte bezeichnet werden können, definieren eine Sicherheitsmarge, damit bereits aktive Tiere sich auf die für sie sich verschlechternden Umgebungsbedingungen einstellen können und zu ihrer Kolonie bzw. Behausung zurückkehren können. So liegt ein Windgeschwindigkeitspufferwert beispielsweise zwischen 0,01 m/s und 2 m/s, vorzugsweise bei 0,5 m/s. Ein Temperaturpufferwert liegt zwischen 0,1 °C und 4 °C, vorzugsweise 0,5 °C. Der Niederschlagspufferwert liegt vorzugsweise zwischen 0,01 l/h/m² und 0,5 l/h/m², insbesondere vorzugsweise bei ca. 0,05 l/h/m². Die Niederschlagsüberwachung wird bevorzugt mit kürzeren Überwachungszeiten als eine Stunde, z.B. im 10min-Intervall durchgeführt. Die Grenzwerte sind dann entsprechend anzupassen. Der Grenzwinkelpuffer liegt vorzugsweise zwischen 0,5° und 15°, ferner vorzugsweise zwischen 1 und 10°, vorzugsweise bei etwa 5°.

Um die Helligkeit zu bestimmen, bei der die Rotordrehzahlreduktion aktiviert wird, ist vorzugsweise vorgesehen, dass zur Bestimmung der Umgebungshelligkeit ein lichtempfindlicher Sensor, insbesondere ein Dämmerungsschalter, verwendet wird. Dies hat den Vorteil, dass die Helligkeit, auf die die Tiere reagieren, witterungsunabhängig bestimmt wird, da bei bedecktem Himmel ein niedriger Helligkeitswert früher erreicht bzw. später verlassen wird als bei einem klaren Himmel. Lichtempfindliche Sensoren und Dämmerungsschalter sind verhältnismäßig zuverlässige und kostengünstige Bauteile.

Alternativ oder zusätzlich dazu ist vorzugsweise vorgesehen, dass die Umgebungshelligkeit ermittelt wird, indem aus geographischen Standortparametern der Windenergieanlage der Zeitpunkt des lokalen Sonnenaufgangs und/oder Sonnenuntergangs errechnet wird, wobei die Rotordrehzahlreduzierung in einem vorbestimmten oder vorbestimmbaren Zeitraum erfolgt, der vor oder zum Zeitpunkt des lokalen Sonnenaufgangs oder Sonnenuntergangs beginnt und nach dem lokalen Sonnenaufgang und/oder Sonnenuntergang endet, wobei insbesondere ein größerer Teil des Zeitraums vor dem lokalen Sonnenaufgang und/oder nach dem lokalen Sonnenuntergang liegt. In diesem Fall wird aus den geographischen Standortparametern, also geographischer Länge und Breite, der exakte Zeitpunkt des Sonnenaufgangs und/oder Sonnenuntergangs bestimmt. Dies ist ebenfalls ein Maß für die Helligkeit. Dabei ist insbesondere zu berücksichtigen, dass der Sonnenaufgang bzw. Sonnenuntergang im Allgemeinen nicht als der Zeitpunkt definiert ist, zu dem die Sonne die Horizontlinie berührt oder durchschreitet, sondern eine Linie, die 50 Winkelminuten unter dem Horizont liegt, also 0,0145 Bogenminuten. Der Sonnenaufgang bzw. Sonnenuntergang lässt sich insofern auf der Grundlage der geographischen Breite und der geographischen Länge einer Windenergieanlage berechnen. Die entsprechenden Berechnungen sind bekannt. Eine einfache Formel zu Sonnenaufgangs- und -untergangszeit ist als Zeitgleichung beispielsweise unter http://lexikon.astronomie.info/zeit-gleichung gezeigt.

Ein typischer Zeitraum, in dem die Rotordrehzahl reduziert wird, ist beispielsweise 20 Minuten vor Sonnenuntergang bis 2 Stunden und 40 Minuten nach Sonnenuntergang. Diese Werte gelten dann in umgekehrter Folge für den Sonnenaufgang. Auch andere Werte können hier, artenspezifisch, verwendet werden. Es ist hierbei die lokale Uhrzeit zu berücksichtigen, um zu entscheiden, welche Zeiträume vor oder nach Sonnenaufgang- bzw. -untergang Anwendung finden.

Die Helligkeitsbestimmung durch einen lichtempfindlichen Sensor, insbesondere Dämmerungsschalter, kann im Rahmen der Erfindung auch mit der Bestimmung der Umgebungshelligkeit anhand der Berechnung des Zeitpunkts des lokalen Sonnenaufgangs oder Sonnenuntergangs kombiniert werden, indem die Abfrage des lichtempfindlichen Sensors nur in einem erweiterten Zeitfenster um den Sonnenaufgang und/oder Sonnenuntergang herum geschieht, beispielsweise ein bis zwei Stunden vor Sonnenuntergang beginnend oder nach Sonnenaufgang endend.

Vorzugsweise erfolgt die Berechnung des Zeitpunktes des lokalen Sonnenaufgangs und/oder Sonnenuntergangs wenigstens innerhalb des Datumsbereichs täglich. Damit ist täglich der jeweils aktuelle Sonnenaufgangszeitpunkt und/oder Sonnenuntergangszeitpunkt verfügbar.

Vorteilhafterweise wird der Rotor durch die Drehzahlreduzierung nahezu oder vollständig zum Stillstand gebracht. Diese weitgehende Drehzahlreduzierung vermindert signifikant die Schlaggefahr für die gefährdete Tierart.

Die Drehzahlreduzierung erfolgt vorzugsweise durch eine Verdrehung des Rotorblatts oder der Rotorblätter in Richtung Fahnenstellung oder durch eine Verschiebung einer Drehzahl-Drehmoment-Kennlinie oder einer Drehzahl-Leistung-Kennlinie in Richtung höheren Drehmoments oder höherer Leistung. Die Verdrehung der Rotorblätter in Richtung Fahnenstellung bedeutet, dass die Rotorblätter weniger bis keine Energie aus dem Wind entnehmen und somit nicht mehr angetrieben werden. Dadurch wird die Rotordrehzahl effektiv reduziert. Auch eine Verschiebung der Kennlinie in Richtung höheren Drehmoments oder höherer Leistung bedeutet eine verstärkte Bremsung des Rotors durch Leistungsentnahme und eine entsprechende Abbremsung des Rotors mit folgender Drehzahlreduzierung. Letztere Alternative hat den Vorteil einer kontinuierlichen Leistungsentnahme bei reduzierter Rotordrehzahl.

Die der Erfindung zugrunde liegende Aufgabe wird auch durch eine Windenergieanlage, umfassend einen Rotor mit wenigstens einem Rotorblatt und eine Betriebssteuervorrichtung, gelöst, wobei die Betriebssteuervorrichtung ausgebildet ist, gemäß dem oben beschriebenen erfindungsgemäßen Verfahren die Rotordrehzahl zu reduzieren. Die erfindungsgemäße Windenergieanlage hat somit die gleichen Eigenschaften und Vorteile, wie das erfindungsgemäße Verfahren.

Vorzugsweise ist ein lichtempfindlicher Sensor, insbesondere ein Dämmerungsschalter, vorgesehen, mittels dessen eine Umgebungshelligkeit messbar ist.

Ferner vorzugsweise ist ein Regensensor vorgesehen, mittels dessen eine Niederschlagsstärke messbar ist.

Schließlich erfährt die erfindungsgemäße Windenergieanlage eine vorteilhafte Weiterbildung, wenn Spalte und/oder Öffnungen an der Windenergieanlage mittels Labyrinthdichtungen, Bürstendichtungen, umlaufenden Gummidichtungen und/oder Drahtgittern mit einer Maschenweite von weniger als 10 mm abgedichtet sind, insbesondere Spalte zwischen Blattwurzel und Spinner, Spalte zwischen Spinner und Gondel oder Spalte zwischen Gondel und Turm, Kühllufteinlässe, Mannlöcher und/oder Kranluken. Die Spalten und die genannten Öffnungen werden von Fledermäusen, zumindest im Ruhezustand der Windenergieanlage, gerne als Unterschlupf verwendet, wobei bei jedem Anfahren der Windenergieanlage die Tiere einer tödlichen Gefahr ausgesetzt sind. Labyrinthdichtungen, Bürstendichtungen, umlaufende Gummidichtungen und/oder Drahtgitter mit enger Maschenweite verhindern ein Eindringen der Tiere in die Öffnungen der Windenergieanlage. Labyrinthdichtungen basieren auf dem Prinzip, dass ein Spalt durch formkomplementäre Ausgestaltung der Seitenwände des Spaltes mit Windungen oder Ecken und Kurven ausgestaltet ist, durch die Tiere nicht eindringen können. Diese Art der Dichtung ist außerdem berührungslos, so dass sie besonders geeignet ist, die Spalte zwischen gegeneinander drehend bewegten Komponenten einer Windenergieanlage gegeneinander abzudichten.

Die zu den genannten Erfindungsgegenständen, d.h. dem erfindungsgemäßen Verfahren und der erfindungsgemäßen Windenergieanlage, genannten Merkmale, Vorteile und Eigenschaften gelten jeweils ohne Einschränkung auch für den jeweils anderen Erfindungsgegenstand.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäßen Windenergieanlage,
- Fig. 2: eine schematische Darstellung einer erfindungsgemäßen Betriebssteuerung,
- Fig. 3: eine schematische Darstellung der lokalen Gegebenheiten eines Windparks und einer Fledermauskolonie,
- Fig. 4a, b: schematische Darstellungen des Einflusses von Windrichtungen auf den Betrieb von Windenergieanlagen und
- Fig. 5: eine schematische beispielhafte erfindungsgemäße Ablaufsteuerung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

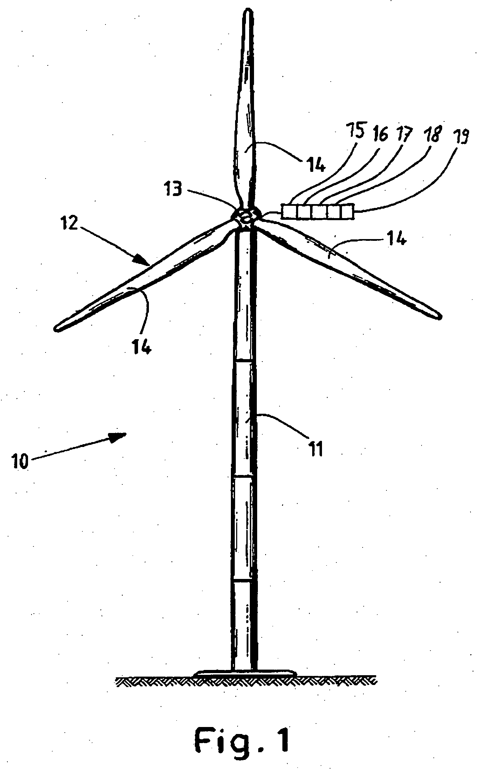

In Fig. 1 ist eine erfindungsgemäße Windenergieanlage 10 dargestellt. Diese umfasst einen Turm 11, an dessen Spitze ein Rotor 12 mit einer zentralen Rotornabe 13 und drei Rotorblättern 14 angeordnet ist. Schematisch ist dargestellt, dass sich im Bereich des Rotors 12 bzw. der nicht dargestellten Gondel, die von der Rotornabe 13 verdeckt ist, mehrere Sensoren angeordnet sind. Dabei handelt es sich um einen Dämmerungsschalter 15 als Beispiel eines lichtempfindlichen Sensors, um einen Windgeschwindigkeitssensor 16, um einen Temperatursensor 17, um einen Windrichtungssensor 18 und einen Regenstärkensensor 19. Mittels dieser Sensoren 15 bis 19 werden Umgebungsvariablen gemessen, aus denen auf die Flugaktivität von geschützten Flugtieren, beispielsweise Fledermäusen, rückgeschlossen werden kann. Anhand dieser Umgebungsvariablen wird, wenn die Umgebungsvariablen eine Flugaktivität der geschützten Tiere begünstigt, die Drehzahl des Rotors 12 reduziert, um eine Schlaggefahr für die geschützten Tiere zu vermindern.

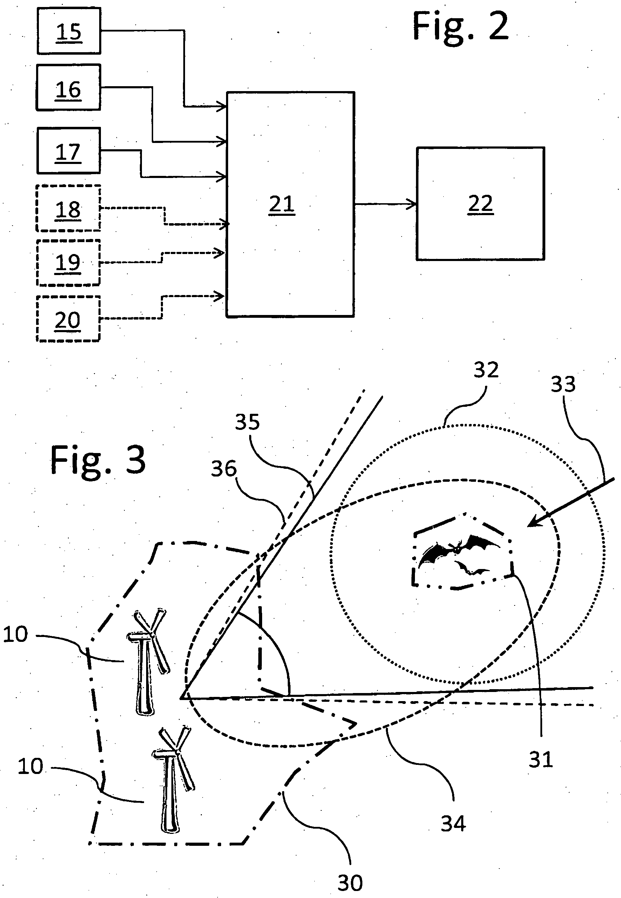

In Fig. 2 ist eine Betriebssteuerung 21 der Windenergieanlage 10 gemäß Fig. 1 schematisch dargestellt. Diese erhält Messdaten von dem Dämmerungsschalter 15 oder alternativ dem Berechnungsmodul für den Sonnenstand, dem Windgeschwindigkeitssensor 16, dem Temperatursensor 17, dem Windrichtungssensor 18, dem Regenstärkensensor 19 sowie einem Sensor 20, der die Orientierung der Gondel beschreibt.

Die drei letztgenannten Sensoren sind gestrichelt gezeichnet, da es sich hierbei um optionale und vorteilhaft hinzuzufügende Sensoren für die erfindungsgemäße Steuerung zum Fledermausschutz handelt. Bei dem Sensor 20 handelt es sich bevorzugt um einen Sensor, der eine absolute Referenzierung der Gondel, z.B. bezüglich der Nordrichtung, ermöglicht.

Sobald sich alle gemessenen Umgebungsvariablen inklusive der steuerungsinternen Kalenderfunktion innerhalb der Parameterbereiche befinden, die eine Flugaktivität der betreffenden Flugtiere begünstigt, teilt die Betriebssteuerung 21 der Blattwinkelsteuereinheit 22 mit, dass die Rotorblätter in Richtung Fahnenstellung zu bewegen sind. Damit wird jedes Rotorblatt 14 aus dem Wind gedreht, so dass nur noch wenig oder keine Leistung mehr aus dem Wind entnommen wird, wodurch der Rotor 12 abgebremst wird. Alternativ kann die Generatorsteuereinheit (nicht dargestellt) angewiesen werden, den Generator anhand einer in Richtung auf eine höhere Leistung oder ein höheres Drehmoment verschobenen Kennlinie zu steuern. Auch hierdurch wird die Rotordrehzahl vermindert.

In Fig. 3 ist schematisch ein Teil einer Landkarte abgebildet. Im linken Teil der Landkarte befindet sich ein Windpark 30, dessen Grenze mit einer strichpunktierten Linie gekennzeichnet ist. Beispielshaft sind zwei Windenergieanlagen 10 im Windpark 30 dargestellt. Außerhalb der Grenzen des Windparks 30 befindet sich eine Fledermauskolonie 31. Bei windstillem Wetter bewegen sich die Fledermäuse der Kolonie 31 innerhalb eines Fluggebiets 32, das um die Fledermauskolonie 31 herum zentriert ist. Bei stärkerem Wind, dessen Windrichtung mit dem Pfeil 33 dargestellt ist, verlagert sich das Fluggebiet 32 zu dem Fluggebiet 34, das in Richtung auf den Windpark 30 hin verlängert ist. Der äußere Bereich des verlängerten Fluggebiets 34 überschneidet den Windpark 30.

Ebenfalls in Fig. 3 ist ein Grenzwinkelbereich 35 mit zwei durchgezogenen Linien dargestellt, der der vereinfachten Darstellung halber im Zentrum des Windparks 30 beginnt und einen Sektor definiert, der auf die Fledermauskolonie 31 hin zentriert ist. Der Winkelbereich um die Fledermauskolonie 31 herum ist so groß, dass das in Fig. 3 gezeigte Fluggebiet 32 bei Windstille vollständig umfasst ist. Mit gestrichelten Linien 36 ist außerdem noch ein Grenzwinkelpuffer eingezeichnet, der beidseits des eigentlichen Grenzwinkelbereichs 35 definiert ist und für eine Hysterese für das Abschalten des drehzahlreduzierten Regimes von Belang ist. Als Messwert kann beispielsweise der 10-minütige Durchschnittswert der Windrichtung oder der Gondelorientierung herangezogen werden.

Der Grenzwinkelbereich 35 und der Grenzwinkelpuffer 36 gelten insbesondere für das Kriterium der Windrichtung, aber auch für die Orientierung der Gondeln der Windenergieanlage 10. Wenn die Gondeln in dieser Richtung ausgerichtet sind bzw. wenn die Windrichtung in diesem Grenzwinkelbereich liegt, muss mit dem Auftauchen von Fledermäusen aus der Fledermauskolonie 31 im Windpark 30 gerechnet werden. Eine Drehzahlreduzierung der Rotoren der Windenergieanlage 10 ist in diesem Fall angezeigt. Die Gondelorientierung kann auch direkt als Messwert verwendet werden, da sie der Windrichtung mit einer gewissen Verzögerung und Trägheit folgt und somit eine Hardware-Mittelung der Windrichtung betreibt.

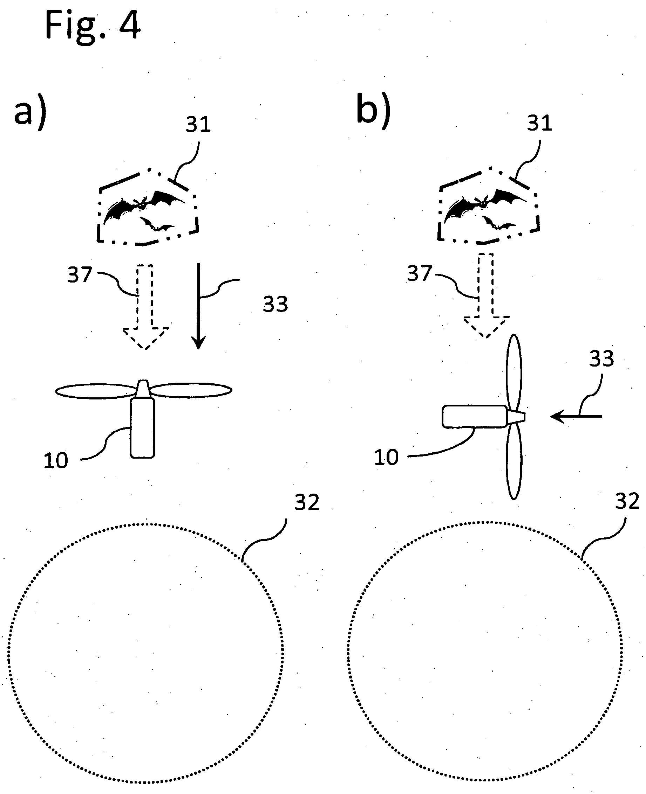

In den Fig. 4a) und 4b) sind zwei Situationen schematisch dargestellt, in denen jeweils eine Fledermauskolonie 31 von einem bevorzugten Fluggebiet 32 entfernt liegt und sich dazwischen eine Windenergieanlage 10 oder ein Windpark befindet. Die Flugrichtung 37 der Fledermäuse von ihrer Kolonie 31 zum Fluggebiet 32 ist weitgehend unabhängig von der Windrichtung 33. Ist die Windrichtung 33, wie in Fig. 4a) dargestellt, in der gleichen Richtung oder in entgegengesetzter Richtung zur Flugrichtung 37 der Fledermäuse, dann sind die Windenergieanlagen 10 den Fledermäusen maximal zugewandt, die Schlaggefahr ist dann ebenfalls maximal. In dieser Situation ist die Rotordrehzahl zum Schutz der Fledermäuse zu reduzieren. Ist hingegen die Windrichtung 33 quer zur Flugrichtung 37, wie in Fig. 4b) gezeigt, dann zeigen die Windenergieanlagen 10 den Fledermäusen ihr schmales Profil, wodurch die Schlaggefahr sinkt. Bei der in Fig. 4b) gezeigten Windrichtung kann die Rotordrehzahl dann weniger oder gar nicht reduziert werden.

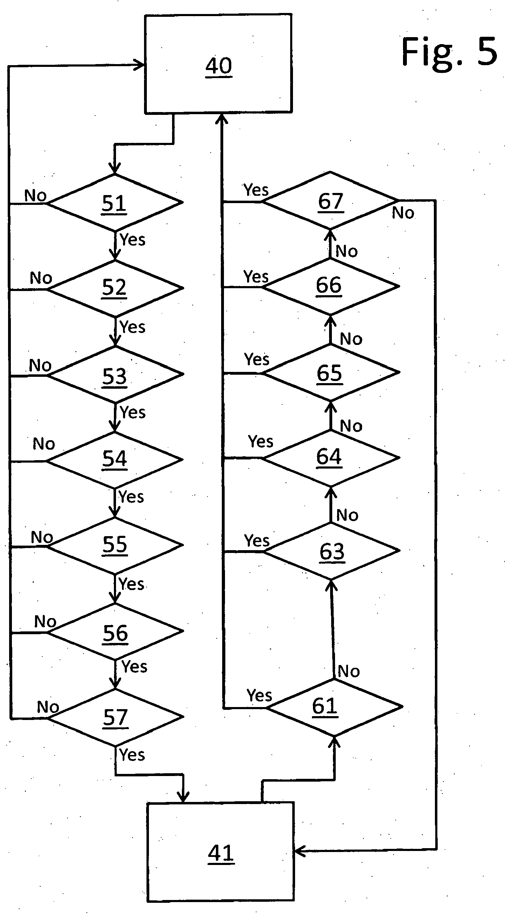

In Fig. 5 ist schematisch der Verfahrensablauf des erfindungsgemäßen Verfahrens dargestellt. Mit den Bezugszeichen 40 und 41 sind die Betriebszustände des Normalbetriebs 40 und des Betriebs 41 mit Drehzahlreduktion dargestellt. Außerhalb des jahreszeitlichen Flugzeitraumes wird immer der Normalbetrieb gefahren. Wenn das Beobachtungsregime angeschaltet wird, wird ausgehend von dem Normalbetrieb 40 eine Kette von Abfragen abgearbeitet, die bei jeweiliger Beantwortung mit "Ja" ("Yes") dazu führt, dass der Betrieb 41 mit Drehzahlreduktion aktiviert wird.

Die Kette von Abfrage besteht aus einer Abfrage 51, ob der Tag des Jahres D innerhalb des jahreszeitlichen Tagesbereichs liegt, in dem die Fledermäuse ihre Flugaktivität entfalten. So wird dann, wenn der jahreszeitliche Zeitraum der Fledermausaktivität in der Abfrage 51 bejaht wird, in der Abfrage 52 abgefragt, ob der Helligkeitsgrenzwert H_{grenz} unterschritten ist. Ist dies der Fall, wird in der Abfrage 53 abgefragt, ob die Windgeschwindigkeit V unterhalb der entsprechenden Grenzwindgeschwindigkeit V_{grenz} liegt. Ist auch dies der Fall, wird in der Abfrage 54 abgefragt, ob die Umgebungstemperatur T oberhalb der unteren Grenztemperatur T_{grenz} liegt. Ist auch dies der Fall, wird in der Abfrage 55 abgefragt, ob eine Niederschlagsstärke N unterhalb eines Niederschlagsgrenzwertes V_{grenz} liegt.

Wenn diese Bedingungen erfüllt sind, wird in der Abfrage 56 abgefragt, ob die Windrichtung R innerhalb eines Winkelbereichs, beispielsweise des Winkelbereichs 35, liegt. Zusätzlich oder alternativ dazu kann auch abgefragt werden, ob die Orientierung der Gondel GOr innerhalb eines entsprechenden Winkelbereichs liegt.

Erst wenn alle diese Abfragen 51 bis 57 mit "ja" beantwortet worden sind, wird der Betriebszustand 41 mit Drehzahlreduktion aktiviert. Liegt nur eine der Variablen bei einer der Abfragen 51 bis 57 außerhalb der entsprechenden Bereiche, so zweigt das Verfahren jeweils ab und bleibt im Normalbetrieb 40, der bis zu dem Zeitpunkt auch nicht verlassen worden ist. Nach einer kurzen, insbesondere vorbestimmten oder vorbestimmbaren, Zeitdauer oder unmittelbar darauffolgend wird die Abfragekette erneut in Gang gesetzt. Nicht dargestellt ist, dass diese Abfrage, solange der Normalbetrieb 40 eingestellt ist, innerhalb eines bestimmten Zeitfensters des Tages erfolgt, in dem Fledermausaktivität überhaupt zu erwarten ist. Dieses Zeitfenster kann eine Dauer von zwei bis fünf Stunden, insbesondere etwa drei Stunden, aufweisen. Die gezeigte schrittweise Abfrage ist nur beispielhaft zu verstehen, ebenso können in einer einzigen Abfrage sämtliche Bedingungen mit UND-Verknüpfung geprüft werden.

Ist einmal der Betrieb 41 mit Drehzahlreduktion eingestellt, so wird laufend überprüft, ob der drehzahlreduzierte Betrieb 41 wieder verlassen werden kann und ein Normalbetrieb 40 eingestellt werden kann. Dies dient einer Erhöhung der Effizienz, wobei die Fledermäuse oder andere geschützte Tiere nicht gefährdet werden, da überprüft wird, ob die Bedingungen immer noch die Flugaktivität der entsprechenden Tiere begünstigen.

So wird in einer ersten Abfrage 61 abgefragt, ob das Zeitintervall, in dem der Betrieb 41 mit Drehzahlreduktion gefahren wird, abgelaufen ist. Ist dies der Fall, wird der Normalbetrieb 40 wieder aufgenommen. Ist dies nicht der Fall, so wird eine weitere Abfragekette 63 bis 67 durchlaufen. In der Abfrage 63 wird abgefragt, ob die Windgeschwindigkeit V inzwischen einen Wert überschreitet, der die Summe aus der Grenzwindgeschwindigkeit V_{grenz} und einem Windgeschwindigkeitspufferwert V_{puffer} beträgt. Ist dies der Fall, so wird der Normalbetrieb 40 eingestellt. Wenn nicht, wird die Abfrage 64 durchlaufen, wobei abgefragt wird, ob die Umgebungstemperatur inzwischen unterhalb eines Wertes gefallen ist, die der Grenztemperatur T_{grenz} abzüglich eines Umgebungstemperaturpufferwertes T_{puffer} entspricht. Ist dies der Fall, so wird der Normalbetrieb 40 eingestellt.

Wenn nicht, so wird die Abfrage 65 durchlaufen, wobei abgefragt wird, ob eine Niederschlagsstärke N inzwischen einen Wert überschreitet, der die Summe aus dem Niederschlagsgrenzwert V_{grenz} und einem Niederschlagspuffer N_{puffer} beträgt. Ist dies der Fall, so wird der Normalbetrieb 40 eingestellt. Falls nicht, wird die Abfrage 66 durchlaufen, wobei abgefragt wird, ob die Windrichtung inzwischen außerhalb des um einen Puffer 36 erweiterten Grenzwinkelbereichs 35 liegt. Ist dies der Fall, wird der Normalbetrieb 40 eingestellt. Falls nicht, wird weiter in der Abfrage 67 abgefragt, ob die Gondelorientierung inzwischen außerhalb des um den Puffer 36 erweiterten Grenzwinkelbereichs 35 für die Gondelorientierung liegt. Wenn dies der Fall ist, so wird der Normalbetrieb 40 eingestellt. Wenn nicht, geht die Abfrageschleife zurück zum drehzahlreduzierten Betriebszustand 41.

Dieses Ablaufschema ist als beispielhaft zu verstehen. Die Abfragen können auch in unterschiedlicher logischer Abfolge oder Kombination miteinander verknüpft werden.

Insbesondere kann die Verknüpfung der Abfrage so sein, dass die Abfragen 51 bis 54 kumulativ mit "Ja" beantwortet sein müssen, während von den übrigen Abfragen 55 bis 57 nur beispielsweise eine oder zwei mit "Ja" beantwortet sein müssen, um den Betriebszustand 40, 41 zu ändern. Auch eine Gewichtung der einzelnen Abfragen bezogen auf ihre Indikatorfunktion bezüglich der Flugaktivitäten der geschützten Tiere und eine Betriebszustandsänderung in Reaktion auf eine Überschreitung eines vorbestimmbaren oder vorbestimmten Grenzwerts durch die gewichtete Summe ist im Rahmen der Erfindung umfasst. Dies kann damit kombiniert werden, dass die Abfrage von Datum, Helligkeit, Windgeschwindigkeit und Temperatur kumulativ erfüllt sein sollen. In ähnlicher Weise lassen sich auch die Abfragen 63 bis 67 in anderer als der dargestellten Weise verknüpfen, so dass beispielsweise das Verlassen nur eines Parameters seines flugbegünstigten Bereichs noch nicht zur Änderung des Betriebszustandes ausreicht, sondern eine Gewichtung oder eine Kumulation notwendig ist. ,

Eine derartige Gewichtung ermöglicht es, im Endeffekt eine mathematische Abschätzung des Kollisionsrisikos durchzuführen, welches unterhalb eines vorbestimmten Grenzwertes bleiben muss. Ein derartiger Grenzwert kann beispielsweise im Bereich von 1 bis 5 Kollisionen pro Jahr und Windenergieanlage bzw. Windpark liegen

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Windenergieanlage
- 11: Turm
- 12: Rotor
- 13: Rotornabe
- 14: Rotorblatt
- 15: Dämmerungsschalter
- 16: Windgeschwindigkeitssensor
- 17: Temperatursensor
- 18: Windrichtungssensor
- 19: Regenstärkensensor
- 20: Orientierung der Gondel
- 21: Betriebssteuerung
- 22: Blattwinkelsteuereinheit
- 30: Windpark
- 31: Fledermauskolonie
- 32: Fluggebiet bei Windstille
- 33: Windrichtung
- 34: Fluggebiet bei Wind
- 35: Grenzwinkelbereich
- 36: Grenzwinkelpuffer
- 37: Flugrichtung
- 40: Normalbetrieb
- 41: Betrieb mit Drehzahlreduktion
- 51: Abfrage: Dₘᵢₙ ≤ D ≤ Dₘₐₓ?
- 52: Abfrage: H < H_{grenz}
- 53: Abfrage: V < V_{grenz}
- 54: Abfrage: T > T_{grenz}
- 55: Abfrage: N < Ngrenz
- 56: Abfrage: R innerhalb Winkelbereich
- 57: Abfrage: GOr innerhalb Winkelbereich
- 61: Abfrage: Zeitintervall abgelaufen
- 63: Abfrage: V > V_{grenz} + V_{puffer}
- 64: Abfrage: T < T_{grenz} - T_{puffer}
- 65: Abfrage: N > V_{grenz} + N_{puffer}
- 66: Abfrage: R außerhalb Winkelbereich einschließlich Puffer
- 67: Abfrage: GOr außerhalb Winkelbereich einschließlich Puffer
- D: Tag des Jahres
- Dmin: Anfangstag
- Dmax: Endtag
- H: Helligkeit
- H_{grenz}: Helligkeitsgrenzwert
- V: Windgeschwindigkeit
- V_{grenz}: Grenzwindgeschwindigkeit
- V_{puffer}: Windgeschwindigkeitspufferwert.
- T: Umgebungstemperatur
- T_{grenz}: Grenztemperatur
- T_{puffer}: Umgebungstemperaturpufferwert
- N: Niederschlagsstärke
- V_{grenz}: Niederschlagsgrenzwert
- N_{puffer}: Niederschlagspufferwert
- R: Windrichtung
- GOr: Gondelorientierung

## Patentansprüche

1. Verfahren zum Betreiben einer Windenergieanlage (10), die einen Rotor (12) mit wenigstens einem Rotorblatt (14) und eine Betriebssteuervorrichtung (21) umfasst, **dadurch gekennzeichnet, dass** zum Schutz von Fledermäusen in kumulativer Abhängigkeit von den Umgebungsvariablen Umgebungshelligkeit (H), kalendarisches Datum (D), Windgeschwindigkeit (V) und Umgebungstemperatur (T) die Rotordrehzahl reduziert wird.

2. Verfahren nach Anspruch 1, **dadurch gekennzeichnet, dass** die Drehzahlreduzierung aktiviert wird, wenn die Umgebungshelligkeit (H) einen vorbestimmten oder vorbestimmbaren Helligkeitsgrenzwert (HEgrenz-) unterschreitet, das kalendarische Datum (D) in einem vorbestimmten oder vorbestimmbaren Datumsbereich (Dmin bis Dmax) liegt, die Windgeschwindigkeit (V) unterhalb einer vorbestimmten oder vorbestimmbaren Grenzwindgeschwindigkeit (Vgrenz) liegt und die Umgebungstemperatur (T) oberhalb einer vorbestimmten oder vorbestimmbaren Grenztemperatur (Tgrenz) liegt.

3. Verfahren nach Anspruch 1 oder 2, **dadurch gekennzeichnet, dass** eine Drehzahlreduzierung nur erfolgt, wenn zusätzlich eine gemessene Niederschlagsstärke (N) unterhalb eines vorbestimmten oder vorbestimmbaren Niederschlagsgrenzwerts (Ngrenz) liegt.

4. Verfahren nach einem der Ansprüche 1 bis 3, **dadurch gekennzeichnet, dass** eine Drehzahlreduzierung nur erfolgt, wenn zusätzlich eine Windrichtung (R) und/oder eine Ausrichtung der Windenergieanlage (GOr) innerhalb eines vorbestimmten oder vorbestimmbaren Winkelbereichs (35) liegt.

5. Verfahren nach einem der Ansprüche 1 bis 4, **dadurch gekennzeichnet, dass** die Drehzahlreduzierung spätestens nach einem vorbestimmten oder vorbestimmbaren Zeitintervall aufgehoben wird.

6. Verfahren nach einem der Ansprüche 1 bis 5, **dadurch gekennzeichnet, dass** eine bestehende Drehzahlreduzierung aufgehoben wird, wenn die Windgeschwindigkeit (V) die Grenzwindgeschwindigkeit (Vgrenz) um einen vorbestimmten oder vorbestimmbaren Windgeschwindigkeitspufferwert (Vpuffer) überschreitet, wenn die Umgebungstemperatur (T) den Temperaturgrenzwert (Tgrenz) um einen vorbestimmten oder vorbestimmbaren Temperaturpufferwert (Tpuffer) unterschreitet, wenn die gemessene Niederschlagsstärke (N) den Niederschlagsgrenzwert (Ngrenz) um einen vorbestimmten oder vorbestimmbaren Niederschlagspufferwert (Npuffer) überschreitet oder wenn die Windrichtung (R) und/oder die Ausrichtung (GOr) der Windenergieanlage (10) sich um mehr als einen vorbestimmten oder vorbestimmbaren Grenzwinkelpuffer (36) aus dem Winkelbereich (35) heraus bewegt.

7. Verfahren nach einem der Ansprüche 1 bis 6, **dadurch gekennzeichnet, dass** zur Bestimmung der Umgebungshelligkeit (H) ein lichtempfindlicher Sensor, insbesondere ein Dämmerungsschalter (15), verwendet wird.

8. Verfahren nach einem der Ansprüche 1 bis 7, **dadurch gekennzeichnet, dass** die Umgebungshelligkeit (H) ermittelt wird, indem aus geographischen Standortparametern der Windenergieanlage der Zeitpunkt des lokalen Sonnenaufgangs und/oder Sonnenuntergangs errechnet wird, wobei die Rotordrehzahlreduzierung in einem vorbestimmten oder vorbestimmbaren Zeitraum erfolgt, der vor oder zum Zeitpunkt des lokalen Sonnenaufgangs oder Sonnenuntergangs beginnt und nach dem lokalen Sonnenaufgang oder Sonnenuntergang endet, wobei insbesondere ein größerer Teil des Zeitraums vor dem lokalen Sonnenaufgang oder nach dem lokalen Sonnenuntergang liegt.

9. Verfahren nach Anspruch 8, **dadurch gekennzeichnet, dass** die Berechnung des Zeitpunktes des lokalen Sonnenaufgangs und/oder Sonnenuntergangs wenigstens innerhalb des Datumsbereichs (Dmin bis Dmax) täglich erfolgt.

10. Verfahren nach einem der Ansprüche 1 bis 9, **dadurch gekennzeichnet, dass** der Rotor (12) durch die Drehzahlreduzierung nahezu oder vollständig zum Stillstand gebracht wird.

11. Verfahren nach einem der Ansprüche 1 bis 10, **dadurch gekennzeichnet, dass** die Drehzahlreduzierung durch eine Verdrehung des Rotorblatts (14) oder der Rotorblätter (14) in Richtung Fahnenstellung oder durch eine Verschiebung einer Drehzahl-Drehmoment-Kennlinie oder einer Drehzahl-Leistung-Kennlinie in Richtung höheren Drehmoments oder höherer Leistung erfolgt.

12. Windenergieanlage (10), umfassend einen Rotor (12) mit wenigstens einem Rotorblatt (14) und eine Betriebssteuervorrichtung (21), **dadurch gekennzeichnet, dass** die Betriebssteuervorrichtung (21) ausgebildet ist, gemäß einem Verfahren nach einem der Ansprüche 1 bis 11 die Rotordrehzahl zu reduzieren.

13. Windenergieanlage (10) nach Anspruch 12, **dadurch gekennzeichnet, dass** ein lichtempfindlicher Sensor, insbesondere ein Dämmerungsschalter (15), vorgesehen ist, mittels dessen eine Umgebungshelligkeit (H) messbar ist.

14. Windenergieanlage (10) nach Anspruch 12 oder 13, **dadurch gekennzeichnet, dass** ein Regensensor (19) vorgesehen ist, mittels dessen eine Niederschlagsstärke (N) messbar ist.

15. Windenergieanlage (10) nach einem der Ansprüche 12 bis 14, **dadurch gekennzeichnet, dass** Spalte und/oder Öffnungen an der Windenergieanlage (10) mittels Labyrinthdichtungen, Bürstendichtungen, umlaufenden Gummidichtungen und/oder Drahtgittern mit einer Maschenweite von weniger als 10 mm abgedichtet sind, insbesondere Spalte zwischen Blattwurzel und Spinner, Spalte zwischen Spinner und Gondel oder Spalte zwischen Gondel und Turm (11), Kühllufteinlässe, Mannlöcher und/oder Kranluken.

## Claims

1. A method for operating a wind power installation (10), which comprises a rotor (12) with at least one rotor blade (14) and an operating control device (21), **characterized in that** the rotor speed is reduced to protect bats in cumulative dependency on the environmental variables ambient brightness (B), calendar date (D), wind speed (V) and ambient temperature (T).

2. The method according to claim 1, **characterized in that** the speed reduction is activated when the ambient brightness (B) falls below a predetermined or predeterminable brightness threshold value (Bₗᵢₘᵢₜ), the calendar date (D) lies in a predetermined or predeterminable date range (Dmin to Dmax), the wind speed (V) lies below a predetermined or predeterminable threshold wind speed (Vₗᵢₘᵢₜ) and the ambient temperature (T) lies above a predetermined or predeterminable threshold temperature (Tₗᵢₘᵢₜ).

3. The method according to claim 1 or 2, **characterized in that** a speed reduction only takes place when additionally a measured precipitation strength (N) lies below a predetermined or predeterminable precipitation threshold value (Nₗᵢₘᵢₜ).

4. The method according to one of claims 1 to 3, **characterized in that** a speed reduction only takes place when additionally a wind direction (R) and/or an alignment of the wind power installation (GOr) lies within a predetermined or predeterminable angle range (35).

5. The method according to one of claims 1 to 4, **characterized in that** the speed reduction is lifted at the latest after a predetermined or predeterminable time interval.

6. The method according to one of claims 1 to 5, **characterized in that** an existing speed reduction is lifted when the wind speed (V) exceeds the threshold wind speed (Vₗᵢₘᵢₜ) by a predetermined or predeterminable wind speed buffer value (V_{buffer}), when the ambient temperature (T) falls below the temperature threshold value (Tₗᵢₘᵢₜ) by a predetermined or predeterminable temperature buffer value (T_{buffer}), when the measured precipitation strength (N) exceeds the precipitation threshold value (Nₗᵢₘᵢₜ) by a predetermined or predeterminable precipitation buffer value (N_{buffer}) or when the wind direction (R) and/or the alignment (GOr) of the wind power installation (10) moves out of the angle range (35) by more than a predetermined or predeterminable threshold angle buffer (36).

7. The method according to one of claims 1 to 6, **characterized in that** a light-sensitive sensor, in particular a twilight switch (15), is used to determine the ambient brightness (B).

8. The method according to one of claims 1 to 7, **characterized in that** the ambient brightness (B) is determined **in that** the time of the local sunrise and/or sunset is calculated from geographic location parameters of the wind power installation, wherein the rotor speed reduction takes place in a predetermined or predeterminable period, which begins before or at the time of the local sunrise or sunset and ends after the local sunrise or sunset, wherein in particular a larger portion of the period lies before the local sunrise or after the local sunset.

9. The method according to claim 8, **characterized in that** the calculation of the time of the local sunset and/or sunrise takes place daily at least within the date range (Dmin to Dmax).

10. The method according to one of claims 1 to 9, **characterized in that** the rotor (12) is brought to a complete or close to a complete standstill through the speed reduction.

11. The method according to one of claims 1 to 10, **characterized in that** the speed reduction is carried out by a rotation of the rotor blade (14) or of the rotor blades (14) into the feathering position or by a shift of the speed-torque characteristic line or a speed-power characteristic line in the direction of a high torque or higher power.

12. A wind power installation (10), comprising a rotor (12) with at least one rotor blade (14) and an operating control device (21), **characterized in that** the operating control device (21) is designed to reduce the rotor speed according to a method according to one of claims 1 to 11.

13. The wind power installation (10) according to claim 12, **characterized in that** a light-sensitive sensor, in particular a twilight switch (15), is provided, by means of which an ambient brightness (B) is measurable.

14. The wind power installation (10) according to claim 12 or 13, **characterized in that** a rain sensor (19) is provided, by means of which a precipitation strength (N) is measurable.

15. The wind power installation (10) according to one of claims 12 to 14, **characterized in that** gaps and/or openings on the wind power installation (10) are sealed by means of labyrinth seals, brush seals, circumferential rubber seals and/or wire fencing with a mesh width of less than 10 mm, in particular gaps between blade root and spinner, gaps between spinner and nacelle or gaps between nacelle and tower (11), cool air inlets, manholes and/or crane hatches.

## Revendications

1. Procédé pour faire fonctionner une éolienne (10) comprenant un rotor (12) ayant au moins une pale de rotor (14) et un dispositif de contrôle opérationnel (21), **caractérisé en ce que**, dans le but de protéger les chauve-souris, la vitesse du rotor est réduite en fonction, cumulativement, de variables d'environnement que sont la luminosité ambiante (H), la date calendaire (D), la vitesse du vent (V) et la température ambiante (T).

2. Procédé selon la revendication 1, **caractérisé en ce que** la réduction de vitesse de rotation est activée lorsque la luminosité ambiante (H) tombe en dessous d'un seuil de luminosité (HEgrenz-) prédéterminé ou apte à être prédéterminé, la date calendaire (D) se trouve dans une plage de dates (Dmin à Dmax) prédéterminée ou pouvant être prédéterminée, la vitesse du vent (V) est en dessous d'une vitesse limite du vent (Vgrenz) prédéterminée ou apte à être prédéterminée, et la température ambiante (T) est au-dessus d'une température limite (Tgrenz) prédéterminée ou pouvant être prédéterminée.

3. Procédé selon la revendication 1 ou 2, **caractérisé en ce qu'**une réduction de la vitesse de rotation est effectuée uniquement lorsque, en plus, une intensité mesurée de précipitation (N) est inférieure à un seuil de précipitation (Ngrenz) prédéterminé ou apte à être prédéterminée.

4. Procédé selon l'une quelconque des revendications 1 à 3, **caractérisé en ce qu'**une réduction de la vitesse de rotation est effectuée uniquement lorsque, en plus, une direction du vent (R) et / ou une orientation de l'éolienne (GOr) se trouve dans une plage angulaire prédéterminée ou apte à être prédéterminée (35).

5. Procédé selon l'une quelconque des revendications 1 à 4, **caractérisé en ce que** la réduction de vitesse de rotation est annulée au plus tard après un intervalle de temps prédéterminé ou apte à être prédéterminé.

6. Procédé selon l'une quelconque des revendications 1 à 5, **caractérisé en ce qu'**une réduction de la vitesse de rotation existante est annulée lorsque la vitesse du vent (V) dépasse la vitesse limite du vent (Vgrenz) par une valeur tampon de vitesse du vent (Vpuffer) prédéterminée ou apte à être prédéterminée, lorsque la température ambiante (T) dépasse la température limite (Tgrenz) par une valeur tampon de température (Tpuffer) prédéterminée ou apte à être prédéterminée, lorsque l'intensité mesurée de précipitation (N) dépasse le seuil de précipitation (Ngrenz) par une valeur tampong de précipitatin (Npuffer) prédéterminée ou apte à être prédéterminée, ou lorsque la direction du vent (R) et / ou l'orientation (GOr) de l'éolienne (10) se déplace hors de la plage angulaire (35) de plus d'un tampon d'angle limite (36) prédéterminé ou apte à être prédéterminé.

7. Procédé selon l'une quelconque des revendications 1 à 6, **caractérisé en ce qu'**un capteur photosensible, en particulier un interrupteur crépusculaire (15), est utilisé pour déterminer la luminosité ambiante (H).

8. Procédé selon l'une quelconque des revendications 1 à 7, **caractérisé en ce que** la luminosité ambiante (H) est déterminée par le fait que le moment de lever et / ou coucher local du soleil est calculée à partir des paramètres géographiques de l'emplacement de l'éolienne, la réduction de la vitesse de rotation du rotor a lieu dans une période de temps prédéterminée ou apte à être prédéterminée, qui commence avant ou au moment du lever local du soleil ou du coucher local du soleil et se termine après le lever local du soleil ou le coucher local du soleil, en particulier une plus grande partie de la période se trouvant avant le lever local du soleil ou après le coucher local du soleil.

9. Procédé selon la revendication 8, **caractérisé en ce que** le calcul du moment du lever local du soleil et / ou du coucher local du soleil est effectuée quotidiennement, au moins dans la plage de dates (Dmin à Dmax).

10. Procédé selon l'une quelconque des revendications 1 à 9, **caractérisé en ce que** le rotor (12), via la réduction de vitesse de rotation, est presque complètement mis à l'arrêt.

11. Procédé selon l'une quelconque des revendications 1 à 10, **caractérisé en ce que** la réduction de vitesse de rotation est réalisée par une rotation de la pale de rotor (14) ou des pales de rotor (14) dans la direction vers la position à plumes ou par une changement d'une courbe caractéristique vitesse-couple ou d'une courbe caractéristique vitesse-puissance vers plus de couple ou plus de puissance.

12. Èolienne (10), comprenant un rotor (12) ayant au moins une pale de rotor (14) et un dispositif de contrôle opérationnel (21), **caractérisée en ce que** le dispositif de contrôle opérationnel (21) est adapté pour réduire la vitesse de rotation du rotor selon un procédé selon l'une quelconque des revendications 1 à 11.

13. Èolienne (10) selon la revendication 12, **caractérisée en ce qu'**il est prévu un capteur photosensible, en particulier un interrupteur crépusculaire (15), au moyen duquel une luminosité ambiante (H) est mesurable.

14. Èolienne (10) selon la revendication 12 ou 13, **caractérisée en ce qu'**il est prévu un détecteur de pluie (19), au moyen duquel une intensité de précipitation (N) est mesurable.

15. Èolienne (10) selon l'une quelconque des revendications 12 à 14, **caractérisé en ce que** les interstices et / ou les ouvertures sur l'éolienne (10) sont scellés au moyen de joints labyrinthes, joints à brosse, joints en caoutchouc périphériques et / ou de treillis métallique avec une taille de maille de moins de 10 mm, en particulier les interstices entre la racine de la pale et le spinner, les écarts entre le spinner et la nacelle ou entre la nacelle et la tour (11), les admissions d'air frais, trous d'homme et / ou les écoutilles de la tour.
